# EUROPÄISCHE PATENTSCHRIFT

(11) **EP 4 076 832 B1**
(45) Veröffentlichungstag und Bekanntmachung des Hinweises auf die Patenterteilung: **26.06.2024**
(21) Anmeldenummer: 20829772.1
(22) Anmeldetag: 17.12.2020
(51) Int. Cl.: B23K 26/60, B23K 26/70, G05B 19/4061, B23K 26/38

(54) **VERFAHREN ZUR TRENNENDEN BEARBEITUNG EINES WERKSTÜCKS SOWIE SOFTWAREPROGRAMMPRODUKT**
METHOD FOR THE SEPARATING PROCESSING OF A WORKPIECE AND SOFTWARE PROGRAM PRODUCT
PROCÉDÉ DE TRAITEMENT DE SÉPARATION D'UNE PIÈCE ET PRODUIT DE PROGRAMME LOGICIEL

(30) Priorität: 18.12.2019 DE 102019134854
(43) Veröffentlichungstag der Anmeldung: 26.10.2022
(73) Patentinhaber: TRUMPF Werkzeugmaschinen SE + Co. KG, 71254 Ditzingen (DE)
(72) Erfinder: MACH, Patrick, 71384 Weinstadt (DE); STRUCKMEIER, Frederick, 71229 Leonberg (DE)
(74) Vertreter: Trumpf Patentabteilung
(86) Internationale Anmeldenummer: PCT/EP2020/086859
(87) Internationale Veröffentlichungsnummer: WO 2021/123044

(56) Entgegenhaltungen:
- WO-A1-2018/224697
- WO-A2-2018/077763
- DE-B3-102014 200 208
- US-A1- 2010 193 479

## Beschreibung

Die Erfindung betrifft ein Verfahren zur trennenden Bearbeitung eines Werkstücks. Das Werkstück kann insbesondere plattenförmig oder rohrförmig ausgebildet sein. Bei der trennenden Bearbeitung wird ein Werkstückteil aus dem Werkstück entlang einer Schneidkontur herausgetrennt. Zur trennenden Bearbeitung wird im Rahmen des Verfahrens eine Strahlschneidvorrichtung, insbesondere Laserschneidvorrichtung, mit einem Schneidkopf verwendet.

Die Strahlschneidvorrichtung umfasst eine Werkstückauflage mit einer Mehrzahl an Auflagepunkten für das Werkstück. Die Werkstückauflage dient zur Aufnahme des Werkstücks.

Während der trennenden Bearbeitung wird der Schneidkopf in einer Schneidhöhe über dem Werkstück positioniert und in schneidendem Betrieb entlang der Schneidkontur bewegt, wodurch das Werkstück geschnitten bzw. das Werkstückteil ausgeschnitten wird.

Bekannte 2D-Laserschneidvorrichtungen mit einem verfahrbaren Schneidkopf ermöglichen eine automatisierte Fertigung von Werkstückteilen mit hoher Präzision und lassen es zu, auch kleine Losgrößen zu fertigen. Beim Ausschneiden der Werkstückteile aus dem Werkstück kann das Problem auftreten, dass ein ausgeschnittenes Werkstückteil gegenüber dem übrigen Werkstück verkippt. Dies kann zu einer Kollision mit dem in Schneidhöhe positionierten Schneidkopf führen.

Aus der Praxis bekannt ist zur Lösung dieses Problems bspw. eine reduzierte Packungsdichte der Werkstückteile zu verwenden. Die Werkstückteile werden also so weit auseinander positioniert, dass eine Kollision zwischen einem ausgeschnittenen verkippten Werkstückteil und dem Schneidkopf zuverlässig vermieden werden kann. Dies führt zu schlechter Materialausnutzung und damit erhöhten Kosten. Enthält ein Werkstückteil ein oder mehrere andere Werkstückteile, die an vorgegebenen Positionen relativ zum äußeren Werkstückteil geschnitten werden müssen, so kann eine derartige Lösung nicht verwendet werden.

Bekannt aus der Praxis ist ebenso das Fixieren der fast vollständig freigeschnittenen Werkstückteile durch so genannte "Microjoints", also schmale Verbindungsstege zum übrigen Werkstück (Restgitter). Das Bestehenlassen der Microjoints verhindert ein Verkippen der ausgeschnittenen Werkstückteile und damit Kollisionen zwischen diesen und dem Schneidkopf. Die Microjoints werden nach Abarbeiten aller Werkstückteile zum endgültigen Abtrennen der Werkstückteile durchtrennt. Das Durchtrennen der Microjoints kann manuell oder maschinell erfolgen, wobei gegebenenfalls eine Nachbearbeitung der Schnittkanten erforderlich ist. Bei Werkstückteilen mit kleinen Toleranzen ist es manchmal unmöglich, Microjoints überhaupt zu verwenden.

Aus der DE 10 2014 200 208 B3 ist ein Verfahren zur trennenden Bearbeitung eines Werkstücks bekannt, wobei Kollisionen zwischen Schneidkopf und geschnittenen Werkstücken mittels Halteteilen und einer definierten Bearbeitungsreihenfolge vermieden werden.

Aus der WO 2018/224697 A1 ist ein Verfahren zur Steuerung einer Strahlschneidvorrichtung bekannt, wobei zumindest ein Anschnittpunkt oder ein Freischnittpunkt an einer Schneidkontur unter Berücksichtigung eines Risikobereichs an der Schneidkontur bestimmt wird.

Die Aufgabe der vorliegenden Erfindung liegt darin, herkömmliche Verfahren zur trennenden Bearbeitung von Werkstücken in vorteilhafter Weise weiterzubilden, wobei Kollisionen zwischen verkippten Werkstückteilen und dem Schneidkopf oder auch anderen beweglichen Teilen zuverlässig und sicher vermieden werden sollen.

Dies wird erfindungsgemäß dadurch gelöst, dass das Verfahren folgende Schritte umfasst:
Einen Schritt zur Bestimmung der Position der Auflagepunkte. Dieser Schritt kann, entweder das Messen einer Position der Auflagepunkte und/oder einer relativen Lage des Werkstücks zu den Auflagepunkten, umfassen, oder er kann das Annehmen der Position der Auflagepunkte und/oder der relativen Lage des Werkstücks zu den Auflagepunkten umfassen. Mit dem Messen ist dabei die sensorbasierte Erfassung (bspw. über maschinelles Sehen) der Positionen gemeint. Mit dem Annehmen ist das Herleiten der Positionen basierend auf Annahmen oder erfassten indirekten Anhaltspunkten gemeint. Auf mögliche Arten der Messung wird nachfolgend noch weiter im Detail eingegangen.

Weiter umfasst das Verfahren einen Schritt zur Festlegung von anfangspunktfreien Bereichen abhängig von einer Form der Schneidkontur. In den anfangspunktfreien Bereichen wird also festgelegt, dass hier kein Anfangspunkt der trennenden Bearbeitung des Werkstücks liegen darf. Diese Bereiche werden also im Lauf des weiteren Verfahrens als mögliche Positionen für Anfangspunkte der trennenden Bearbeitung ausgeschlossen.

Das Verfahren kann weiter einen Schritt zur Festlegung von endpunktfreien Bereichen umfassen, wobei diese abhängig von einer Form der Schneidkontur und alternativ oder zusätzlich abhängig von Anforderungen an die Schnittqualität festgelegt werden. Beispielsweise kann es unvorteilhaft sein, wenn in bestimmten Bereichen der Schneidkontur der Endpunkt der trennenden Bearbeitung liegt, da im Bereich des Endpunkts typischerweise die Qualität der Trennbearbeitung niedriger sein kann. Im weiteren Verfahren wird also ausgeschlossen, dass in diesen Bereichen Endpunkte der trennenden Bearbeitung liegen. Dabei ist mit einem Endpunkt das Ende einer kontinuierlichen Schnittlinie gemeint. Die gesamte Bearbeitung eines Werkstücks kann mehrere einzelne derartige Schnittlinien, die jeweils einen Anfangs- und einen Endpunkt umfassen aufweisen. Typischerweise wird ein Werkstückteil entlang einer kontinuierlichen Schnittlinie aus dem Werkstück herausgetrennt. Typischerweise kann mit einem Anfangspunkt der Punkt gemeint sein, mit dem die trennende Bearbeitung beim Heraustrennen eines Werkstückteils beginnt und mit dem Endpunkt der Punkt gemeint sein, der das Heraustrennen des jeweiligen Werkstückteils abschließt.

Weiter umfasst das Verfahren einen Schritt zur Festlegung von anfangspunkt- und endpunktfreien Bereichen abhängig von der angenommenen oder gemessenen Position der Auflagepunkte und/oder der relativen Lage des Werkstücks zu den Auflagepunkten. Typischerweise werden als Anfangspunkte und als Endpunkte solche Punkte ausgeschlossen, die in Bereichen liegen, die in direktem Kontakt mit der Werkstückauflage stehen.

Weiter umfasst das Verfahren einen Schritt zur Festlegung eines Rasters möglicher Anfangspunkte und Endpunkte unter Auslassung der vorab bestimmten anfangspunkt- und endpunktfreien Bereiche. In den vorangehend beschriebenen Bereichen dürfen keine Anfangspunkte und keine Endpunkte liegen. Der Verlauf der Schneidkontur wird in dem jetzigen Schritt in ein Raster unterteilt, also in einzelne Punkte, die jeweils einen gewissen Abstand zueinander haben. Der Abstand kann dabei zwischen einzelnen Punkten unterschiedlich sein. Typischerweise ist der Abstand zwischen den einzelnen Punkten jedoch bis auf die Bereiche, in denen Anfangspunkte und Endpunkte ausgeschlossen sind, jeweils gleich.

Weiter umfasst das Verfahren entweder einen Schritt zur Berechnung eines Drehmoments in stabilisierender und/oder verkippender Richtung um eine relevante Kippachse für jeden der Punkte des Rasters unter Berücksichtigung der Form der Schneidkontur sowie wenigstens der Materialdicke, -dichte und/oder des Gasdrucks des Schneidkopfs oder einen Schritt zur Berechnung einer Verkipphöhe und/oder einer Verkipptiefe für jeden der Punkte des Rasters unter Berücksichtigung der Form der Schneidkontur sowie der Position der Auflagepunkte. Für die einzelnen Punkte wird also unter Berücksichtigung der oben genannten Parameter sowie bspw. von Berechnungsmodellen die maximale Verkipphöhe und Verkipptiefe ermittelt, wenn diese jeweils als Anfangspunkt oder Endpunkt dienen. Ebenso ist möglich die Drehmomente in stabilisierender oder verkippender Richtung für jeden dieser Punkte zu berechnen.

Das Verfahren kann weiter einen Schritt umfassen in dem eine Rangfolge von Punkten des Rasters geordnet nach den höchsten Drehmomenten in stabilisierender Richtung bzw. niedrigsten Verkipphöhen oder Verkipptiefen oder Drehmomenten in verkippender Richtung erstellt und ggf. an eine Wegplanung des Schneidkopfs übergeben wird. Damit kann beispielsweise eine Wegplanung unter Berücksichtigung der Wahrscheinlichkeit eines Verkippens sowie der möglichen Verkipphöhen oder Verkipptiefen der jeweiligen Punkte ermittelt werden.

Das Verfahren umfasst weiter das Auswählen eines der Punkte des Rasters und Durchführen der trennenden Bearbeitung. Das Verfahren kann weiter umfassen, dass die Punkte des Rasters zwischen 1mm und 12mm, insbesondere zwischen 2mm und 10mm, insbesondere zwischen 3mm und 8mm, insbesondere zwischen 4mm und 6mm, voneinander beabstandet sind. Die unterschiedlichen Untergrenzen der angegebenen Intervalle, sind ebenso in Kombination mit den jeweiligen unterschiedlichen Obergrenzen möglich genau wie die einzelnen angegebenen Obergrenzen in Kombination mit den unterschiedlichen angegebenen Untergrenzen möglich sind.

Das Verfahren kann weiter umfassen, dass das Messen der Position der Auflagepunkte und/oder der relativen Lage des Werkstücks zu den Auflagepunkten durch eine Bildaufnahme der Werkstückauflage nach Auflegen des Werkstücks erfolgt oder dass das Messen der Position der Auflagepunkte und/oder der relativen Lage des Werkstücks zu den Auflagepunkten durch Laser-Triangulation während einer Fahrt einer Beladeeinrichtung, die das Werkstück auf der Werkstückauflage platziert.

Das Verfahren kann weiter umfassen, dass in dem Schritt zur Festlegung von anfangspunktfreien Bereichen abhängig von einer Form der Schneidkontur Bereiche mit Hinterschneidungen, die einen Grenzwert bzgl. eines Formparameters der Hinterschneidung übersteigen, als anfangspunktfrei festgelegt werden. Beispielsweise können Bereiche, in denen eine zu enge Hinterschneidung liegt, als mögliche Anfangspunkte ausgeschlossen werden.

Das Verfahren kann weiter umfassen, dass in dem Schritt zur Festlegung von endpunktfreien Bereichen Bereiche mit erhöhten Anforderungen an die lokale Schnittqualität als endpunktfreie Bereiche festgelegt werden. Wie bereits oben erwähnt, kann in dem Bereich um den Endpunkt die Schnittqualität niedriger sein, sodass Bereiche mit erhöhten Anforderungen an die Schnittqualität von der Betrachtung als mögliche Endpunkte ausgeschlossen werden.

Das Verfahren kann weiter umfassen, dass in dem Schritt zur Festlegung von anfangspunkt- und endpunktfreien Bereichen Bereiche der Schneidkontur, die direkt über Auflagepunkten liegen, als anfangspunkt- und endpunktfreie Bereiche festgelegt werden. Anfangs und Endpunkte sollten also nicht in direktem Kontakt mit den Auflagepunkten stehen.

Das Verfahren kann weiter umfassen, dass jedem der Punkte des Rasters ein umliegender Bereich entlang der Schneidkontur zugeordnet ist und die Wegplanung einen der Punkte des Rasters basierend auf Verkipphöhe, Verkipptiefe, Drehmoment in stabilisierender, und/oder Drehmoment in verkippender Richtung auswählt und einen tatsächlichen Anfangspunkt der trennenden Bearbeitung innerhalb des diesem Punkt zugeordneten Bereichs entlang der Schneidkontur wählt. Während die Berechnungen basierend auf Verkipphöhe, Verkipptiefe und den Drehmomenten lediglich für die jeweiligen Punkte des Rasters durchgeführt werden muss, was den Berechnungsaufwand minimiert, so erlaubt das Inbetrachtziehen von den jeweiligen Punkten zugeordneten Bereichen entlang der Schneidkontur für die Wegplanung (tatsächliche Anfangspunkte müssen nicht auf den Punkten des Rasters liegen sondern nur innerhalb der zugeordneten Bereiche) eine höhere Flexibilität bezüglich der Wegplanung, da auch umliegende (bezogen auf die Punkte des Rasters) Orte zur Bewegungsoptimierung des Schneidkopfes als Anfangs- oder Endpunkt in Betracht gezogen werden können. Mit basierend auf Verkipphöhe, Verkipptiefe, Drehmoment in stabilisierender, und/oder Drehmoment in verkippender Richtung ist dabei gemeint, dass diese Werte bei der Auswahl berücksichtigt werden. Beispielsweise kann der Punkt mit dem in dieser Hinsicht günstigsten Wert verwendet werden. Es ist auch möglich, dass mehrere Punkte mit Werten in ober- oder unterhalb einer bestimmten Schwelle ausgewählt werden und die endgültige Wahl basierend auf einer Optimierung der Wegplanung getroffen wird.

Teil der Erfindung ist auch ein Softwareprogrammprodukt mit Steueranweisungen zur Durchführung des Verfahrens nach einem der Ansprüche 1 bis 7, wobei die Steueranweisungen auf einem Datenträger abgespeichert sind, welcher mit einer Steuereinheit der Strahlschneidvorrichtung zum Datenaustausch verbindbar ist, wobei die Strahlschneidvorrichtung eine Messeinrichtung zum Messen einer Position der Auflagepunkte und/oder einer relativen Lage des Werkstücks zu den Auflagepunkten oder Mittel zum Annehmen der Position der Auflagepunkte und/oder der relativen Lage des Werkstücks zu den Auflagepunkten enthält.

Der Datenträger kann als ein transportables Speichermedium oder als ein in einem Kommunikationsnetzwerk eingebundener Server ausgebildet sein.

Weitere Merkmale, Anwendungsmöglichkeiten und Vorteile der Erfindung ergeben sich aus der nachfolgenden Beschreibung von Ausführungsbeispielen der Erfindung, die anhand der Zeichnung erläutert werden, wobei die Merkmale sowohl in Alleinstellung als auch in unterschiedlichen Kombinationen für die Erfindung wesentlich sein können, ohne dass hierauf nochmals explizit hingewiesen wird. Es zeigen:
- Figur 1: eine Strahlschneidvorrichtung;
- Figur 2: einen Teilbereich der Strahlschneidvorrichtung aus Figur 1;
- Figur 3: einen Teilbereich der Strahlschneidvorrichtung aus Figur 1;
- Figur 4: ein rohrförmiges Werkstück;
- Figur 5: Bearbeitung eines rohrförmigen Werkstücks;
- Figur 6: ein plattenförmiges Werkstück; und
- Figur 7: einen Momentenverlauf entlang einer Schneidkontur eines Werkstückteils.

In den folgenden Figuren tragen sich entsprechende Bauteile und Elemente gleiche Bezugszeichen. Der besseren Übersichtlichkeit wegen sind nicht in allen Figuren sämtliche Bezugszeichen wiedergegeben.

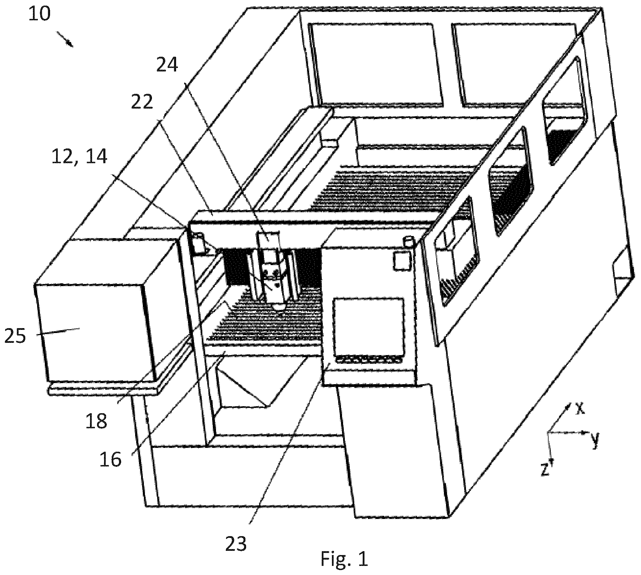

Fig. 1 zeigt eine an sich bekannte Laserschneidvorrichtung 10, als Beispiel einer Strahlschneidvorrichtung 10, zum Schneiden von platten- oder rohrartigen Werkstücken. Die Laserschneidvorrichtung 10 umfasst eine Schneideinrichtung 12 mit einem Schneidkopf 14, sowie einen Arbeitstisch 16 mit einer Werkstückauflage 18 für ein Werkstück 20.

Das Werkstück 20 kann beispielsweise eine Blechtafel oder ein Blechrohr sein. Die Werkstückauflage 18 wird von einem Querträger 22 überspannt, der in einer ersten Achsrichtung (x-Richtung) verfahrbar geführt ist. Am Querträger 22 ist ein Führungsschlitten 24 für den Schneidkopf 14 angebracht, der an dem Querträger 22 entlang einer zweiten Achsrichtung (y-Richtung) verfahrbar geführt und über eine Steuereinheit 23 steuerbar ist. Der Schneidkopf 14 kann somit in einer Ebene parallel zur Werkstückauflage 18 verfahren werden. Zudem kann der Schneidkopf 14 in einer dritten Achsrichtung (z-Richtung) höhenverfahrbar ausgebildet sein, um den Abstand senkrecht zu einem Werkstück 20 zu verändern.

Ein vom Schneidkopf 14 ausgehender Laserstrahl (nicht gezeigt) dient zur trennenden Bearbeitung des Werkstücks. Der Laserstrahl wird von einer Laserstrahlquelle 25 erzeugt und beispielsweise durch ein Strahlführungsrohr und mehrere Umlenkspiegel zum Schneidkopf 14 geführt. Über eine Fokussierlinse oder adaptive Optik kann ein gebündelter Laserstrahl auf das Werkstück gerichtet werden. Aufgrund der Verfahrbarkeit des Querträgers 22 in x-Richtung und des Führungsschlittens 24 in y-Richtung kann mit dem Laserstrahl jeder beliebige Punkt an einem Werkstück 20 angefahren werden. Der Schneidkopf 14 kann auch gegenüber der z-Richtung verschwenkbar sein.

Ist der Schneidkopf 14 höhenverfahrbar, kann durch eine Änderung des Abstands zu dem Werkstück 20 die Fokuslage des Laserstrahls eingestellt werden. In Fokuslage ist durch den Abstand des Schneidkopfs 14 von dem Werkstück 20, beziehungsweise der weiter unten angegebenen Auflageebene 26, die Schneidhöhe des Schneidkopfs 14 gegeben. Der Abstand des Schneidkopfs 14 von dem Werkstück 20, insbesondere die Schneidhöhe, kann vor und während des Schneidprozesses eingestellt werden.

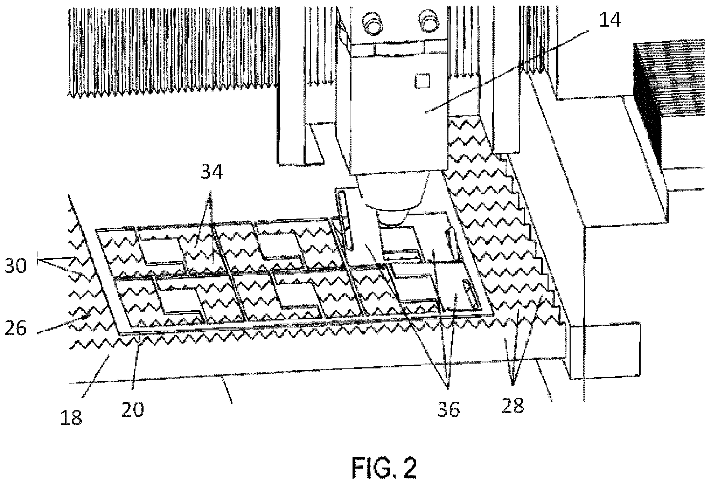

In Fig. 2 ist die Werkstückauflage 18 mit einem als Blechtafel ausgebildeten Werkstück 20 vergrößert dargestellt. In dem gezeigten Ausführungsbeispiel wird die Werkstückauflage 18 durch eine Vielzahl von Auflageelementen 28 mit beispielsweise dreieckig ausgebildeten Tragpunktspitzen 30 gebildet, welche die oben erwähnte Auflageebene 26 für das zu bearbeitende Werkstück 20 definieren. Die Tragpunktspitzen 30 bilden jeweils Auflagepunkte.

Die Auflageelemente 28 sind hier beispielsweise als längliche Auflagestege ausgeführt, die mit einem beispielsweise konstanten Zwischenabstand nebeneinanderliegend angeordnet sind, so dass zwischen zwei Auflageelementen 28 eine Vertiefung 34 gebildet wird. Die Auflageelemente 28 sind in einem vorbestimmten Raster angeordnet, so dass die Position der Tragpunktspitzen 30 ermittelt werden kann. Nicht näher dargestellt ist eine Absaugeinrichtung, durch welche während des Laserschneidens entstehender Schneidrauch, Schlackepartikel und kleine Abfallteile abgesaugt werden können.

Da die Werkstückauflage 18 das Werkstück 20 nicht vollflächig unterstützt, können frei geschnittene Werkstückteile 36 relativ zum Werkstück 20 beziehungsweise Auflageebene 26 verkippen. Ob ein ausgeschnittenes Werkstückteil 36 verkippt oder nicht, hängt von der Anzahl und den Positionen der das Werkstückteil 36 stützenden Tragpunktspitzen 30 ab.

Ungeachtet dessen kann auch durch den Gasstrahldruck beim Laserschneiden das Verkippen eines Werkstückteils 36 verursacht sein. Insbesondere können ausgeschnittene Werkstückteile 36 in die Vertiefungen zwischen den Auflageelemente 28 gelangen.

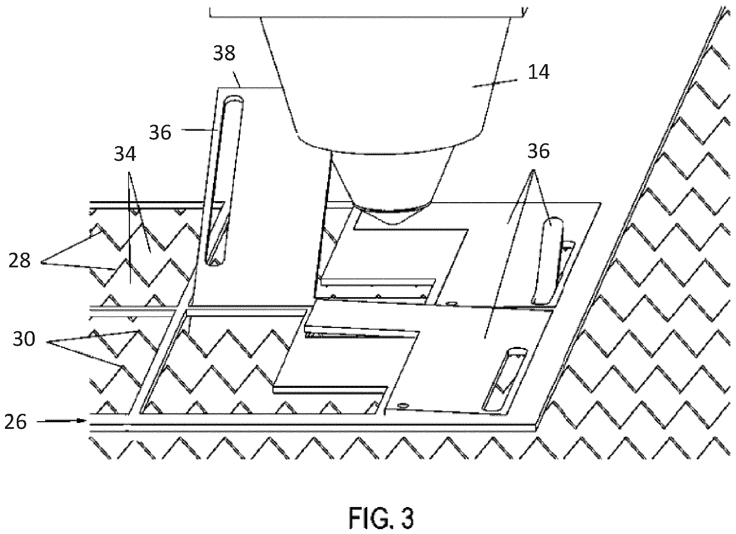

Wie in der vergrößerten Darstellung von Fig. 3 veranschaulicht, kann ein nach oben verkipptes Werkstückteil 36 zu einer Kollision mit dem Schneidkopf 14 führen. Zwar kann ein Schneidkopf 14 mit einer entsprechenden Verfahrhöhe das verkippte Werkstückteil 36 überfahren, jedoch muss der Schneidkopf 14 häufig in einer relativ niedrigen Schneidhöhe positioniert werden, so dass eine Kollision bei einem hoch verkippten Werkstückteil 36 möglich ist. Entsprechendes gilt für einen nicht höhenverfahrbaren Schneidkopf 14, der sich stets in Schneidhöhe befindet. Somit hängt eine Kollision zwischen einem verkippten Werkstückteil 36 und dem Schneidkopf 14 von den Abmessungen des Schneidkopfs 14 in Schneidhöhe und der Verkipphöhe des Werkstückteils 36 ab. In dem gezeigten Ausführungsbeispiel ragt ein Seitenrand 38 des rechteckigen Werkstückteils 36 nach oben. Ein gegenüberliegender Seitenrand 38 steckt in einer Vertiefung. Der Schneidkopf 14 hat eine sich konisch verbreiternde Form mit einer kreisscheibenförmigen Querschnittfläche parallel zur Auflageebene 26. Demnach nimmt bei einer konstanten Höhe des Schneidkopfs 14 der Radius seiner Querschnittfläche mit vergrößertem Abstand von der Auflageebene 26 zu.

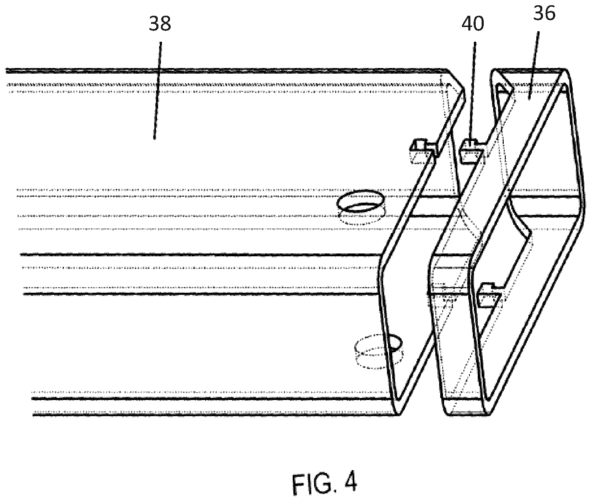

In Fig. 4 ist als Werkstück 20 ein Blechrohr gezeigt, von dem ein Werkstückteil 36 abgeschnitten ist. Das Blechrohr weist an seinem oberen Rand einen hakenförmigen Fortsatz 40 auf.

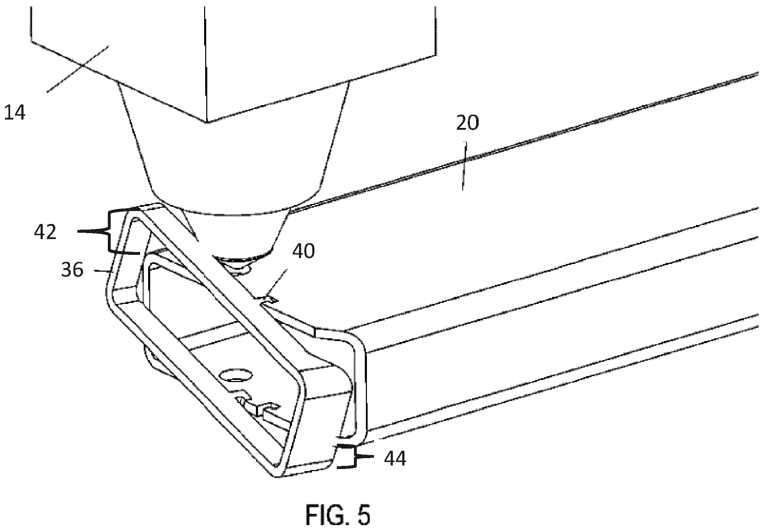

In Fig. 5 ist der Schneidprozess an dem als Blechrohr ausgebildeten Werkstück 20 von Fig. 4 veranschaulicht.

Es ist eine Situation gezeigt, bei der sich das freigeschnittene Werkstückteil 36 durch den Fortsatz 40 am übrigen Werkstück 20 verhakt und relativ zum Werkstück 20 verkippt. Hierdurch kann die dargestellte Kollision zwischen dem in Schneidhöhe befindlichen Schneidkopf 14 und dem verkippten Werkstückteil 36 auftreten. Durch das Verkippen des Werkstückteils 36 resultiert eine Verkipphöhe 42 und eine Verkipptiefe 44.

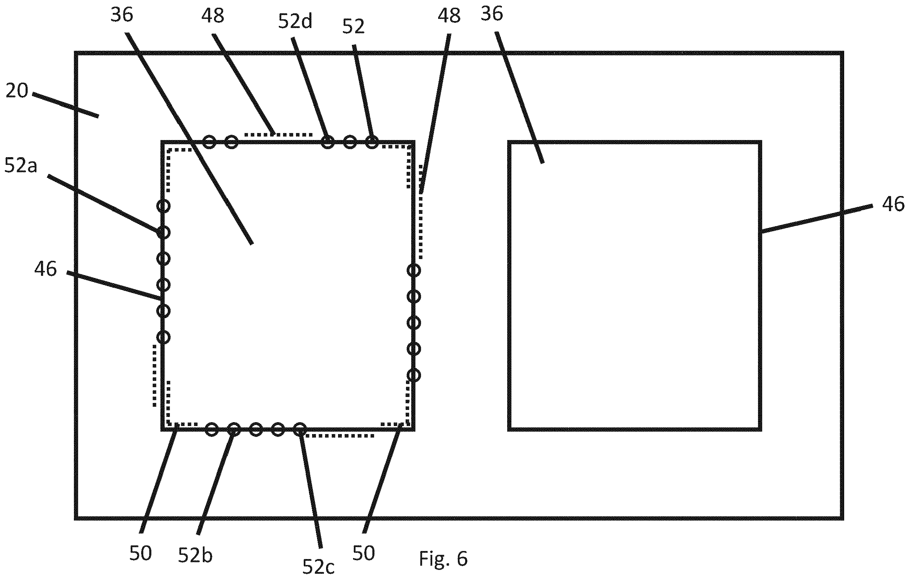

In Fig. 6 ist ein Werkstück 20 und durch den Schneidkopf 14 abzufahrende Schneidkonturen 46 gezeigt, mittels denen jeweils ein Werkstückteil aus dem Werkstück 20 getrennt werden soll. an dem Links dargestellten

Entlang der Schneidkontur sind Bereiche 48 entlang der Schneidkontur 46, die von Anfangspunkte (Einstichstellen) frei bleiben sollen, durch außenliegende punktierte Linien gekennzeichnet. Entsprechend sind Bereiche 50 entlang der Schneidkontur 46, die von Endpunkte (Freischnittpunkten) frei bleiben sollen, durch innenliegende punktierte Linien gekennzeichnet.

In den übrigen Bereichen der Schneidkontur 46 ist diese in ein Raster an Punkten 52 unterteil, von den die Punkte 52a-52d ein hervorgehobenes Bezugszeichen tragen.

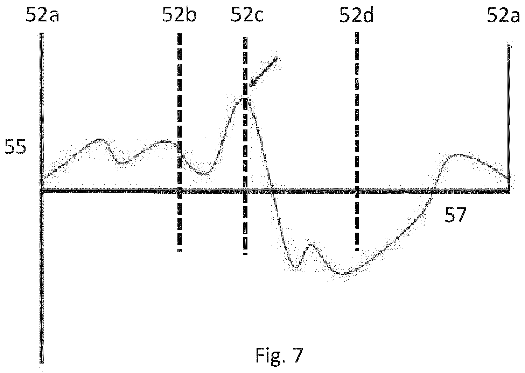

In Figur 7 ist das Drehmoment 55 entlang des Wegs 57 um die Schneidkontur 46 vom Punkt 52a über die Punkte des Rasters zurück zum Punkt 52a aufgetragen. Die Punkte 52b, 52c und 52d sind dabei hervorgehoben. Das Drehmoment liegt vom Punkt 52a in Richtung des Punkts 52c im stabilisierenden Bereich und fällt nach dem Punkt 52c ab in den destabilisierenden, verkippenden Bereich. Die Punkte 52a-52c liegen im stabilisierenden Bereich. Der Punkt 52d liegt im destabilisierenden, verkippenden Bereich. Das maximale stabilisierende Moment liegt im Punkt 52c vor, was durch einen Pfeil hervorgehoben ist.

Um die Sicherheit eines Schneidprozesses zu erhöhen, bzw. das Risiko eines Verkippens zu minimieren, kann eine Wegplanung also den Punkt 52c als Anfangs-(Einstichs) und Endpunkt (Freischnittpunkt) wählen.

Das erfindungsgemäße Verfahren zur trennenden Bearbeitung des Werkstücks 20 dient (am Beispiel der in den Figuren gezeigten Strahlschneidvorrichtung 10) dazu ein entsprechendes Werkstückteil 36 aus dem Werkstück 20 entlang der Schneidkontur 46 herauszutrennen. Zur trennenden Bearbeitung wird die Strahlschneidvorrichtung 10 mit dem Schneidkopf 14 verwendet wird.

Wie bereits erläutert die umfasst Strahlschneidvorrichtung 10 eine Werkstückauflage 18 mit einer Mehrzahl an Auflagepunkten zur Aufnahme des Werkstücks 20 und das Verfahren umfasst folgende Schritte:
einen Schritt zur Bestimmung der Position der Auflagepunkte, wobei dieser Schritt umfasst, entweder das Messen (Bildaufnahme nach dem Auflegen und/oder Laser-Triangulation während dem Beladen) einer Position der Auflagepunkte und/oder einer relativen Lage des Werkstücks 20 zu den Auflagepunkten, oder das Annehmen der Position der Auflagepunkte und/oder der relativen Lage des Werkstücks (20) zu den Auflagepunkten.

Einen Schritt zur Festlegung von anfangspunktfreien Bereichen 48 abhängig von einer Form der Schneidkontur 46. Dabei können bspw. Bereiche mit Hinterschneidungen die einen Grenzwert bzgl. eines Formparameters der Hinterschneidung übersteigen als anfangspunktfrei festgelegt werden.

Ggf. einen Schritt zur Festlegung von endpunktfreien Bereichen 50 abhängig von einer Form der Schneidkontur 46 und/oder Anforderungen an die Schnittqualität.

Einen Schritt zur Festlegung von anfangspunkt- und endpunktfreien Bereichen 48, 50 abhängig von der angenommenen oder gemessenen Position der Auflagepunkte und/oder relativen Lage des Werkstücks 20 zu den Auflagepunkten.

Dabei können bspw. Bereiche der Schneidkontur 46, die direkt über Auflagepunkten liegen, als anfangspunkt- und endpunktfreie Bereiche 48, 50 festgelegt werden.

Einen Schritt zur Festlegung eines Rasters möglicher Anfangspunkte und Endpunkte (Das sind die Punkte 52 des Rasters) unter Auslassung der vorab bestimmten anfangspunkt- und endpunktfreien Bereiche 48, 50;

Das Verfahren umfasst weiter entweder einen Schritt zur Berechnung eines Drehmoments 55 in stabilisierender und/oder verkippender Richtung um eine relevante Kippachse für jeden der Punkte des Rasters unter Berücksichtigung der Form der Schneidkontur 46 sowie wenigstens der Materialdicke, -dichte und/oder des Gasdrucks des Schneidkopfs 14, oder einen Schritt zur Berechnung einer Verkipphöhe 42 und/oder einer Verkipptiefe 44 für jeden der Punkte 52 des Rasters unter Berücksichtigung der Form der Schneidkontur 46 sowie der Position der Auflagepunkte.

Es kann weiter einen Schritt vorgesehen sein, in dem eine Rangfolge von Punkten 52 des Rasters geordnet nach den höchsten Drehmomenten 55 in stabilisierender Richtung bzw. niedrigsten Verkipphöhen 42 oder Verkipptiefen 44 oder Drehmomenten 55 in verkippender Richtung erstellt und ggf. an eine Wegplanung des Schneidkopfs 14 übergeben wird.

Das Verfahren umfasst weiter das Auswählen eines der Punkte 52 des Rasters und Durchführen der trennenden Bearbeitung vorgesehen sein. Jedem der Punkte 52 des Rasters kann ein umliegender Bereich entlang der Schneidkontur 46 zugeordnet sein und die Wegplanung kann einen der Punkte 52 des Rasters basierend auf Verkipphöhe 42, Verkipptiefe 44, Drehmoment 55 in stabilisierender, und/oder Drehmoment 55 in verkippender Richtung auswählen und einen tatsächlichen Anfangspunkt der trennenden Bearbeitung innerhalb des diesem Punkt zugeordneten Bereichs entlang der Schneidkontur 46 wählen.

## Patentansprüche

1. Verfahren zur trennenden Bearbeitung eines, insbesondere plattenförmigen, Werkstücks (20), wobei ein Werkstückteil (36) aus dem Werkstück (20) entlang einer Schneidkontur (46) herausgetrennt wird, wobei zur trennenden Bearbeitung eine Strahlschneidvorrichtung (10) mit einem Schneidkopf (14) verwendet wird, wobei die Strahlschneidvorrichtung (10) eine Werkstückauflage (18) mit einer Mehrzahl an Auflagepunkten zur Aufnahme des Werkstücks (20) aufweist und das Verfahren folgende Schritte umfasst:
einen Schritt zur Bestimmung der Position der Auflagepunkte, wobei dieser Schritt umfasst, entweder
Messen einer Position der Auflagepunkte und/oder einer relativen Lage des Werkstücks (20) zu den Auflagepunkten,
oder Annehmen der Position der Auflagepunkte und/oder der relativen Lage des Werkstücks (20) zu den Auflagepunkten;
einen Schritt zur Festlegung von anfangspunktfreien Bereichen (48) abhängig von einer Form der Schneidkontur (46) ;
insbesondere einen Schritt zur Festlegung von endpunktfreien Bereichen (50) abhängig von einer Form der Schneidkontur (46) und/oder Anforderungen an die Schnittqualität;
einen Schritt zur Festlegung von anfangspunkt- und endpunktfreien Bereichen (48, 50) abhängig von der angenommenen oder gemessenen Position der Auflagepunkte und/oder relativen Lage des Werkstücks (20) zu den Auflagepunkten;
**gekennzeichnet durch die Schritte:**
einen Schritt zur Festlegung eines Rasters möglicher Anfangspunkte und Endpunkte unter Auslassung der vorab bestimmten anfangspunkt- und endpunktfreien Bereiche (48, 50);
entweder einen Schritt zur Berechnung eines Drehmoments (55) in stabilisierender und/oder verkippender Richtung um eine relevante Kippachse für jeden der Punkte des Rasters unter Berücksichtigung der Form der Schneidkontur (46) sowie wenigstens der Materialdicke, - dichte und/oder des Gasdrucks des Schneidkopfs (14); oder einen Schritt zur Berechnung einer Verkipphöhe (42) und/oder einer Verkipptiefe (44) für jeden der Punkte (52) des Rasters unter Berücksichtigung der Form der Schneidkontur (46) sowie der Position der Auflagepunkte;
insbesondere einen Schritt in dem eine Rangfolge von Punkten (52) des Rasters geordnet nach den höchsten Drehmomenten (55) in stabilisierender Richtung bzw. niedrigsten Verkipphöhen (42) oder Verkipptiefen (44) oder Drehmomenten (55) in verkippender Richtung erstellt und ggf. an eine Wegplanung des Schneidkopfs (14) übergeben wird;
Auswählen eines der Punkte (52) des Rasters und Durchführen der trennenden Bearbeitung.

2. Verfahren nach Anspruch 1, **dadurch gekennzeichnet, dass** die Punkte (52) des Rasters zwischen 1mm und 12mm voneinander beabstandet sind.

3. Verfahren nach Anspruch 1 oder 2, **dadurch gekennzeichnet, dass** das Messen der Position der Auflagepunkte und/oder der relativen Lage des Werkstücks (20) zu den Auflagepunkten durch eine Bildaufnahme der Werkstückauflage (18) nach Auflegen des Werkstücks (20) erfolgt oder dass das Messen der Position der Auflagepunkte und/oder der relativen Lage des Werkstücks (20) zu den Auflagepunkten durch Laser-Triangulation während einer Fahrt einer Beladeeinrichtung, die das Werkstück (20) auf der Werkstückauflage (18) platziert.

4. Verfahren nach einem der Ansprüche 1 bis 3, **dadurch gekennzeichnet, dass** in dem Schritt zur Festlegung von anfangspunktfreien Bereichen (48) abhängig von einer Form der Schneidkontur (46) Bereiche mit Hinterschneidungen die einen Grenzwert bzgl. eines Formparameters der Hinterschneidung übersteigen als anfangspunktfrei festgelegt werden.

5. Verfahren nach einem der Ansprüche 1 bis 4, **dadurch gekennzeichnet, dass** in dem Schritt zur Festlegung von endpunktfreien Bereichen (50) Bereiche mit erhöhten Anforderungen an die lokale Schnittqualität als endpunktfreie Bereiche (50) festgelegt werden.

6. Verfahren nach einem der Ansprüche 1 bis 5, **dadurch gekennzeichnet, dass** in dem Schritt zur Festlegung von anfangspunkt- und endpunktfreien Bereichen (48, 50) Bereiche der Schneidkontur (46), die direkt über Auflagepunkten liegen, als anfangspunkt- und endpunktfreie Bereiche (48, 50) festgelegt werden.

7. Verfahren nach einem der Ansprüche 1 bis 6, **dadurch gekennzeichnet, dass** jedem der Punkte (52) des Rasters ein umliegender Bereich entlang der Schneidkontur (46) zugeordnet ist und die Wegplanung einen der Punkte (52) des Rasters basierend auf Verkipphöhe (42), Verkipptiefe (44), Drehmoment (55) in stabilisierender, und/oder Drehmoment (55) in verkippender Richtung auswählt und einen tatsächlichen Anfangspunkt der trennenden Bearbeitung innerhalb des diesem Punkt zugeordneten Bereichs entlang der Schneidkontur (46) wählt.

8. Softwareprogrammprodukt mit Steueranweisungen zur Durchführung des Verfahren nach einem der Ansprüche 1 bis 7, wobei die Steueranweisungen auf einem Datenträger abgespeichert sind, welcher mit einer Steuereinheit (23) einer Strahlschneidvorrichtung (10) zum Datenaustausch verbindbar ist, wobei die Strahlschneidvorrichtung eine Messeinrichtung zum Messen einer Position der Auflagepunkte (32) und/oder einer relativen Lage des Werkstücks (20) zu den Auflagepunkten oder Mittel zum Annehmen der Position der Auflagepunkte und/oder der relativen Lage des Werkstücks (20) zu den Auflagepunkten enthält.

9. Softwareprogrammprodukt nach Anspruch 8, **dadurch gekennzeichnet, dass** der Datenträger als ein transportables Speichermedium oder als ein in einem Kommunikationsnetzwerk eingebundener Server ausgebildet ist.

## Claims

1. A method for the separating machining of a workpiece (20), in particular a plate-shaped workpiece, wherein a workpiece part (36) is cut out of the workpiece (20) along a cutting contour (46), wherein a jet cutting device (10) with a cutting head (14) is used for the separating machining, wherein the jet cutting device (10) has a workpiece support (18) with a plurality of support points for holding the workpiece (20) and the method comprises the following steps:
a step for determining the position of the support points, wherein this step comprises either measuring a position of the support points and/or a relative position of the workpiece (20) to the support points,
or assuming the position of the support points and/or the relative position of the workpiece (20) to the support points;
a step for defining regions (48) free of starting points depending on a shape of the cutting contour (46);
in particular a step for defining regions (50) free of end points depending on a shape of the cutting contour (46) and/or requirements on the cutting quality;
a step for defining regions (48, 50) free of starting points and end points depending on the assumed or measured position of the support points and/or relative position of the workpiece (20) to the support points;
**characterized by the steps:**
a step for defining a grid of possible starting points and end points, omitting the predetermined regions (48, 50) free of starting points and end points;
either a step for calculating a torque (55) in the stabilizing and/or tilting direction about a relevant tilting axis for each of the points of the grid, taking into account the shape of the cutting contour (46) and at least the material thickness, density and/or gas pressure of the cutting head (14);
or a step for calculating a tilting height (42) and/or a tilting depth (44) for each of the points (52) of the grid, taking into account the shape of the cutting contour (46) and the position of the support points;
in particular a step in which a ranking of points (52) of the grid is created in order of the highest torques (55) in the stabilizing direction or lowest tilting heights (42) or tilting depths (44) or torques (55) in the tilting direction and, if necessary, transferred to a path planning of the cutting head (14);
selection of one of the points (52) of the grid and execution of the separating machining.

2. The method according to claim 1, **characterized in that** the points (52) of the grid are spaced between 1mm and 12mm apart.

3. The method according to claim 1 or 2, **characterized in that** the measurement of the position of the support points and/or of the relative position of the workpiece (20) to the support points is carried out by recording an image of the workpiece support (18) after the workpiece (20) has been placed on it, or **in that** the measurement of the position of the support points and/or of the relative position of the workpiece (20) to the support points is carried out by laser triangulation during a movement of a loading device which places the workpiece (20) on the workpiece support (18).

4. The method according to one of claims 1 to 3, **characterized in that**, in the step for defining regions (48) free of starting points, regions with undercuts which exceed a limit value with respect to a shape parameter of the undercut are defined as free of starting points depending on a shape of the cutting contour (46).

5. The method according to one of claims 1 to 4, **characterized in that** in the step for defining regions (50) free of end points, regions with increased requirements for the local cut quality are defined as regions (50) free of end points.

6. The method according to one of claims 1 to 5, **characterized in that**, in the step for defining regions (48, 50) free of starting points and end points, regions of the cutting contour (46) which lie directly above support points are defined as regions (48, 50) free of starting points and end points.

7. The method according to one of claims 1 to 6, **characterized in that** a surrounding area along the cutting contour (46) is assigned to each of the points (52) of the grid and the path planning selects one of the points (52) of the grid based on tilting height (42), tilting depth (44), torque (55) in stabilizing direction and/or torque (55) in tilting direction and selects an actual starting point of the separating machining within the area along the cutting contour (46) assigned to this point.

8. A software program product with control instructions for carrying out the method according to one of claims 1 to 7, wherein the control instructions are stored on a data carrier which can be connected to a control unit (23) of a jet cutting device (10) for data exchange, wherein the jet cutting device contains a measuring device for measuring a position of the support points (32) and/or a relative position of the workpiece (20) to the support points or means for assuming the position of the support points and/or the relative position of the workpiece (20) to the support points.

9. The software program product according to claim 8, **characterized in that** the data carrier is designed as a transportable storage medium or as a server integrated in a communication network.

## Revendications

1. Procédé pour l'usinage par séparation d'une pièce (20), en particulier en forme de plaque, dans lequel une partie (36) de la pièce est séparée de la pièce (20) le long d'un contour (46) de coupe, dans lequel est utilisé pour l'usinage par séparation un dispositif (10) de coupe par faisceau avec une tête (14) de coupe, le dispositif (10) de coupe par faisceau présentant un support (18) de pièce avec une pluralité de points d'appui pour recevoir la pièce (20) et dans lequel le procédé comprend les étapes suivantes :
une étape de détermination de la position des points d'appui, dans laquelle cette étape comprend, soit
la mesure d'une position des points d'appui et/ou d'un emplacement relatif de la pièce (20) par rapport aux points d'appui,
soit l'adoption de la position des points d'appui et/ou de l'emplacement relatif de la pièce (20) par rapport aux points d'appui ;
une étape de définition de zones sans points initiaux (48) en fonction d'une forme du contour (46) de coupe ;
en particulier une étape de définition de zones sans points finaux (50) en fonction d'une forme du contour (46) de coupe et/ou d'exigences quant à la qualité de coupe ;
une étape de définition de zones sans points initiaux et sans points finaux (48, 50) en fonction de la position adoptée ou mesurée des points d'appui et/ou de l'emplacement relatif de la pièce (20) par rapport aux points d'appui ;
**caractérisé par les étapes :**
une étape de définition d'une trame de points initiaux et de points finaux possibles, en excluant les zones sans points initiaux et sans points finaux (48, 50) préalablement déterminées ;
soit une étape de calcul d'un couple (55) dans une direction de stabilisation et/ou de basculement autour d'un axe de basculement pertinent pour chacun des points de la trame en tenant compte de la forme du contour (46) de coupe et d'au moins l'épaisseur, la densité et/ou la pression de gaz du matériau de la tête (14) de coupe ;
soit une étape de calcul d'une hauteur (42) de basculement et/ou d'une profondeur (44) de basculement pour chacun des points (52) de la trame en tenant compte de la forme du contour (46) de coupe ainsi que de la position des points d'appui ;
en particulier une étape dans laquelle un ordre de priorité de points (52) de la trame classés selon les couples (55) les plus élevés dans la direction de stabilisation ou les hauteurs (42) de basculement ou les profondeurs (44) de basculement ou les couples (55) les plus bas dans la direction de basculement est établi et, le cas échéant, transmis à une planification de trajectoire de la tête (14) de coupe ;
la sélection d'un des points (52) de la trame et l'exécution de l'usinage par séparation.

2. Procédé selon la revendication 1, **caractérisé en ce que** les points (52) de la trame sont espacés les uns des autres d'une distance comprise entre 1 mm et 12 mm.

3. Procédé selon la revendication 1 ou 2, **caractérisé en ce que** la mesure de la position des points d'appui et/ou de l'emplacement relatif de la pièce (20) par rapport aux points d'appui est effectuée par une capture d'image du support (18) de pièce après mise en place de la pièce (20) ou **en ce que** la mesure de la position des points d'appui et/ou de l'emplacement relatif de la pièce (20) par rapport aux points d'appui est effectuée par triangulation laser pendant un déplacement d'un dispositif de chargement qui place la pièce (20) sur le support (18) de pièce.

4. Procédé selon l'une quelconque des revendications 1 à 3, **caractérisé en ce que**, dans l'étape de définition de zones sans points initiaux (48), en fonction d'une forme du contour (46) de coupe, des zones comportant des contre-dépouilles qui dépassent une valeur limite par rapport à un paramètre de forme des contre-dépouilles sont définies comme étant sans points initiaux.

5. Procédé selon l'une quelconque des revendications 1 à 4, **caractérisé en ce que**, lors de l'étape de définition de zones sans points finaux (50), des zones présentant des exigences accrues quant à la qualité de coupe locale sont définies comme zones sans points finaux (50).

6. Procédé selon l'une quelconque des revendications 1 à 5, **caractérisé en ce que**, lors de l'étape de définition de zones sans points initiaux et sans points finaux (48, 50), des zones du contour (46) de coupe se trouvant directement au-dessus de points d'appui sont définies comme zones sans points initiaux et sans points finaux (48, 50).

7. Procédé selon l'une quelconque des revendications 1 à 6, **caractérisé en ce que** chacun des points (52) de la trame est associé à une zone environnante le long du contour (46) de coupe, et la planification de trajectoire sélectionne l'un des points (52) de la trame sur la base de la hauteur (42) de basculement, de la profondeur (44) de basculement, du couple (55) dans la direction de stabilisation, et/ou du couple (55) dans la direction de basculement, et sélectionne un point initial réel de l'usinage par séparation dans la zone associée à ce point le long du contour (46) de coupe.

8. Produit de programme logiciel comprenant des instructions de commande pour l'exécution du procédé selon l'une quelconque des revendications 1 à 7, dans lequel les instructions de commande sont enregistrées sur un support de données, lequel peut être relié à une unité de commande (23) d'un dispositif (10) de coupe par faisceau pour l'échange de données, dans lequel le dispositif de coupe par faisceau comprend un dispositif de mesure destiné à mesurer une position des points d'appui (32) et/ou un emplacement relatif de la pièce (20) par rapport aux points d'appui ou des moyens pour adopter la position des points d'appui et/ou l'emplacement relatif de la pièce (20) par rapport aux points d'appui.

9. Produit de programme logiciel selon la revendication 8, **caractérisé en ce que** le support de données est conçu comme un support de stockage transportable ou comme un serveur intégré dans un réseau de communication.
